# EUROPEAN PATENT APPLICATION

(11) **EP 1 710 672 A2**
(43) Date of publication of application: **11.10.2006**
(21) Application number: 06005640.5
(22) Date of filing: 20.03.2006
(51) Int. Cl.: G06F 3/044, G06F 3/038

(54) **System with differentiated user controls and method for operating system with personalized user controls**

(30) Priority: 04.04.2005 US 98089
(71) Applicant: MITSUBISHI DENKI KABUSHIKI KAISHA, Chiyoda-ku, Tokyo 100-8310 (JP)
(72) Inventor: Dietz, Paul H., Hopkinton MA 01748 (US); Harsham, Bret, Newton MA 02461 (US); Shipman, Samuel E., Acton MA 01720 (US); Forlines, Clifton L., Cambridge MA 02141 (US); Leigh, Darren L., Somerville MA 02143 (US); Yerazunis, William S., Acton MA 01720 (US); Schmidt-Nielsen, Bent, Lexington, MA 02421 (US); Ryall, Kathleen, Cambridge, MA 02138 (US)
(74) Representative: Pfenning, Meinig & Partner GbR

(57) **Abstract**

A system differentiates user controls by arranging a conductive surface in a close approximation to each control. A transmitter is connected to the conductive surfaces. The transmitter emits a unique signal to each conductive surface. Electrodes are arranged in close proximity to users of the controls, and a receiver is connected to each corresponding electrode. A particular user is associated with a particular control when the particular user is capacitively coupled to a particular conductive surface via the electrode, the receiver and the transmitter.

## Description

### Field of the Invention

This invention relates generally to user controls, and more particularly to user controls that differentiate particular users touching the controls.

### Background of the Invention

Plant control rooms, airplane cockpits and vehicle dashboards typically include a large number of physical user controls, e.g., control switches, keyboards, mice, touch screens, etc., that can be used concurrently by multiple users to operate systems. Conventional systems have no way for easily distinguishing which particular user has activated a particular control. Thus, all controls operate identically for every user. In addition, there is no way to record a history of which users operated which controls.

There are single user systems that attempt to identify the user and operate the system accordingly. Logging onto a computer system is a common example. However, in this case, it is presumed that only one user operates the physical user interface of the system, e.g., a workstation, after logging on. The system has no way of knowing whether multiple users are interacting with the interface.

The Personal Area Network (PAN), is a system for transferring data by touch, Thomas Zimmerman, "Personal Area Networks: Near-field intrabody communication," Vol. 35, No. 3&4, MIT Media Lab, 1996. PAN uses low frequency electric fields conducted through the user. Data transferred can include a user identity, so a properly enabled doorknob can be programmed to only respond to particular users. Unfortunately, that system is not designed for user interface applications, such as control panels. Adding PAN-type interfaces to many controls is prohibitively expensive. Also, there are significant data collision problems to solve when multiple controls are operated concurrently by a single user.

The Fingerprint User Interface, is a system for operating devices based on the fingerprint of the particular user, Sugiura, Atsushi, Koseki, Yoshiyuki, "A User Interface using Fingerprint Recognition: Holding Commands and Data Objects on Fingers," Mynatt, Elizabeth D., Jacob, Robert J. K. (ed.), Proceedings of the 11th annual ACM symposium on User interface software and technology, p.71-79, November, 1998. That interface allows functionality to vary not only between users, but also between different fingers of the same user. However, that system requires a fingerprint sensor in every device and is not suitable for small controls, such as switches, and user interface applications including a large number of controls. In addition, the cost of integrating a fingerprint sensor into every control is prohibitive.

The Diamond Touch system is an example of a multi-user interface device, see Dietz et al., "Diamond Touch: A multi-user touch technology," Proc. User Interface Software and Technology (UIST) 2001, pp. 219-226, 2001, and U.S. Patent No. 6,498,590 "Multi-user touch surface," issued to Dietz et al., on December 24, 2002, incorporated herein by reference. The Diamond Touch system has many desirable properties. A Diamond Touch system includes an array of antennas embedded in a touch surface. Each antenna transmits a uniquely identifiable signal. By sensing how these signals are coupled through a user, the system determines where the user is touching the surface. Connecting each user to a separate receiver enables the system to uniquely identify locations touched by each user. However, the Diamond Touch system is restricted to specialized touch surfaces with a pattern of embedded antennas.

It is desired to provide a user interface that can cause a system to operate differently for multiple users. In addition, such a system should be able to record the usage history of each user.

### Summary of the Invention

The present invention provides the ability to audit usage, change permissions and change behavior of controls dependent upon the users touching the controls. The invention does this by emitting a uniquely identifiable signal from the surface of each control to be monitored. Each user is associated with a separate receiver.

When a user touches a control, the signal is capacitively coupled through the user to that user's receiver. By examining the received signal, the system can determine which controls that user is operating. This information can be recorded to provide an auditing function, and/or, the information can be used to modify the functionality and/or behavior of each control.

### Brief Description of the Drawings

Figure 1 is a schematic of a multi-user control system according to the invention;
Figure 2 is a schematic of a multi-user control system with a resistive touch-sensitive screen; and
Figure 3 is a flow diagram of a method for operating the control system of Figure 2.

### Detailed Description of the Preferred Embodiment

### System Overview

The invention differentiates operations and behaviors of controls of systems according to different users. The invention is concerned with systems that are typically included in control rooms, airplanes, and vehicles, to name but a few examples. It is desired to operate the system dependent upon the particular users actuating the controls. Both the system functionality and behavior may vary according to the different users. Behavior refers to the 'look and feel' of a control. For example, the behavior can be altered by haptic feedback.

### Controls

In the preferred embodiment of the invention, controls of the system are associated with corresponding conductive surfaces. Each conductive surface is connected to a transmitter that emits a uniquely identifiable signal associated with the control. The conductive surfaces are arranged so that a user is in a close physical proximity to the conductive surface in order to operate the corresponding control.

In addition, the conductive surfaces are arranged so that the capacitive coupling is substantially absent when the user is not near the corresponding controls. Furthermore, the conductive surfaces of the different controls are isolated electrically from each other. To aid detection of multiple, concurrent control usage, it is helpful to limit coupling so that a heavy touch on one control does not mask a light touch on another control. Therefore, a dielectric insulating layer is employed to prevent direct, resistive contact with the conductive surface, limiting coupling and decreasing the required dynamic range of receivers.

### Receiver

A receiver is coupled to each user of the system. The receivers are arranged to receive signals emitted by the conductive surfaces when the user selects and touches the corresponding controls. A convenient way to implement this is with a conductive sheet embedded in the seating and/or back surfaces of chairs occupied by the users. Alternatively, each user can be equipped with a portable receiver, which is worn by the person during use.

### Transmitter

Because a typical system can have tens or hundreds of controls, an efficient way of generating the unique signal for each control uses time-shifted variations of a binary sequence produced by a linear feedback shift register in the transmitter coupled to the conductive surface. This same binary sequence is used in the receivers coupled to the users. A cross-correlation determines the amount of received signal for each shift. This type of signaling is known as code division, multiple access (CDMA). However, other ways for generating the unique signals are also possible, including time division, multiple access (TDMA), and frequency division techniques, see U.S. Patent No. 6,498,590, incorporated herein by reference, for other possible signaling implementations.

In some installations, it may be inconvenient to individually wire the unique transmitter signals to each control. An alternative is to generate some or all of the signals locally. This is particularly useful when the controls are already connected to a communications bus and do not have provisions for unique connections. In this case, the bus can be used to synchronize the signals.

### Touch-Sensitive Controls

One control device of particular importance is a touch-sensitive display screen. It is possible to use the conductive surface of a conventional resistive touch-sensitive screen without modifying the device. Because these types of devices already include a conductive surface, this surface can be modulated directly. In this embodiment, the touch surface operates alternatively as a conventional resistive touch surface, and a modulated conductive surface. It is also possible to continuously modulate this conductive surface, even while measuring touched locations conventionally.

### System Structure and Operation

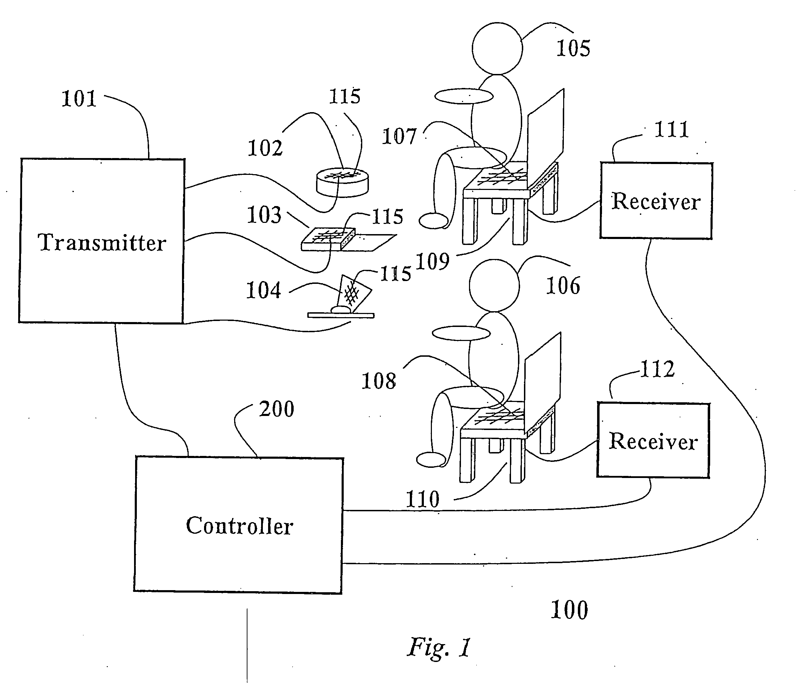

Figure 1 shows an example multi-user control system 100 according to the invention. A multi-channel transmitter 101 provides uniquely identifiable signals to conducting surfaces 115 physically proximal to controls 102-104. Multiple users 105-106 can activate the controls. The users are proximal to corresponding receiving electrodes 107 and 108. In this example, the electrodes are located in the seats of chairs 109 and 110 occupied by the users.

When the user is seated, the user is capacitively coupled to the receiving electrode in the chair. When the user touches a particular control, the user is also capacitively coupled to the conductive surface 115 for that control. Thus, an electrical path is formed between the conductive surface near the control to the receiving electrode near the user. The receiving electrodes are connected to corresponding receivers 111-112. The receivers can detect the uniquely identifiable signals from the conductive surfaces when capacitively coupled through the user.

The controls 102-104, receivers 111 and 112 and the transmitter 101 are connected to a controller 200. The controller provides synchronization information to the transmitter and the receivers, and takes appropriate action based upon settings of the controls activated by the users as determined by the user coupling at the time of actuation. In an alternative embodiment, the users are coupled to unique signal transmitters, and the signals can be received from each control independently.

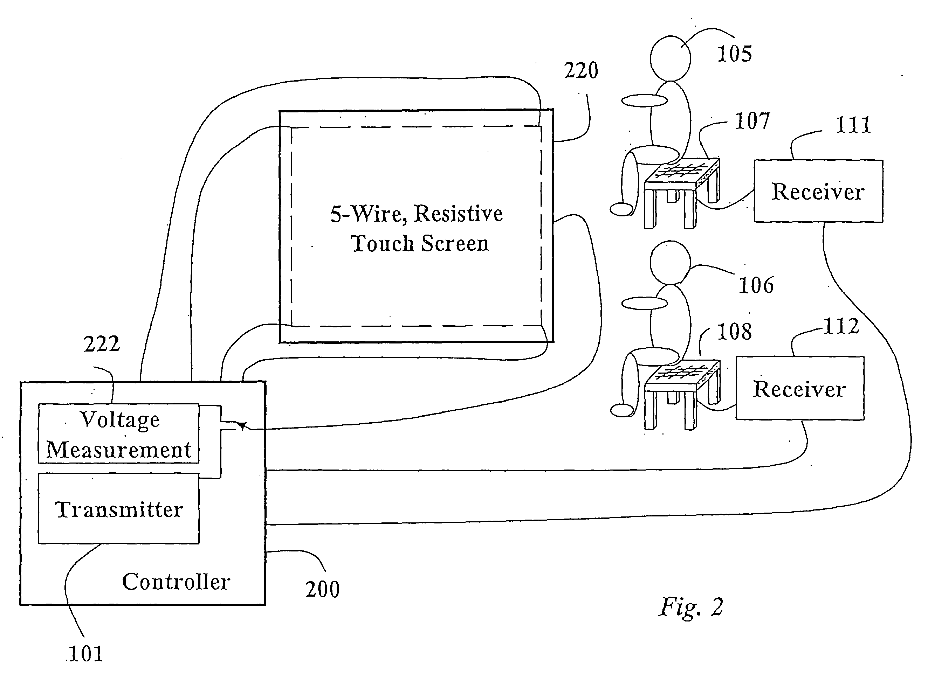

Figure 2 shows an embodiment of the invention using a 5-wire, resistive touch-sensitive screen, with wires connected to touch surfaces as known in the art. The screen 220 is unmodified, but uses a controller 200 according to the invention. The controller alternately measures 222 voltages indicative of touched locations, and decodes uniquely transmitted signals 101 indicative of particular users.

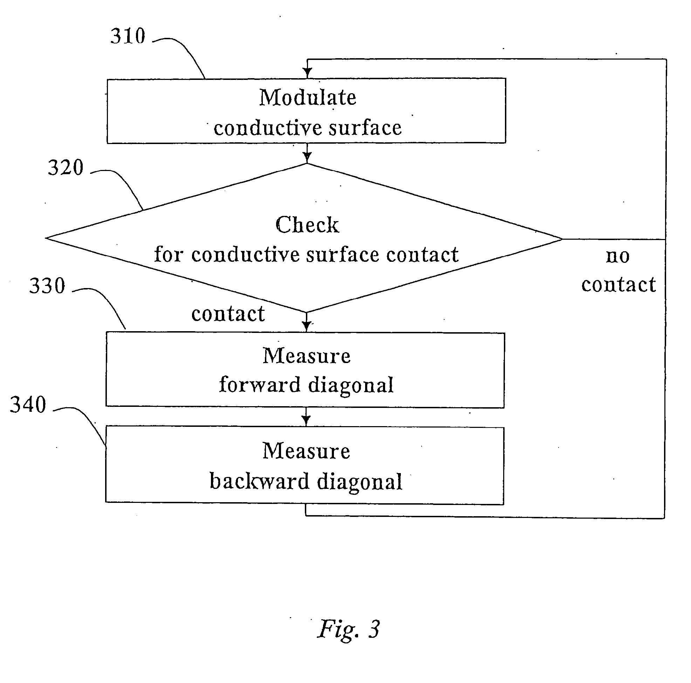

Figure 3 shows an operation of this embodiment. The conductive surface is modulated 310. Then, check 320 for user contact. If no contact, repeat the modulation. If there is contact, measure 330-340 voltages along the diagonals to determine the location of touch, and repeat.

Variations on this basic configuration are possible. For example, the same technique can be applied to a conventional 4-wire resistive touch screen, or other types of touch screens. If the modulated unique signals are sufficiently high in frequency and have a zero mean, then the signals can be added continuously without impacting the location measurement.

### User Identification

The embodiment of Figure 1 identifies the users based on proximity to a receiving electrode. In some circumstances, it may be advantageous to know the precise identity of the user. The user can be identified using a 'log-on' procedure. This log-on procedure can use any of the well-known techniques for identification such as providing a password, reading a security card or an RFID tag, inserting a key, scanning a fingerprint, and eye scanning. By simply monitoring the capacitance of the receiving electrode, the system can detennine whether a user has entered or exited the area proximal to the electrodes in order to determine when log-on is required. Other means can be used for this purpose, including weight sensing. In this embodiment, the system does not accept control input from a newly seated user until the user is properly identified.

In other circumstances, it may be sufficient to know the class of the user. For instance, if the user is a child, it may be desirable to disable certain controls. In this case, a classification system may be used to determine the class of the user, e.g., by using a weight sensing device or any other object classification technique. The system can use any of the methods described above to determine when the user has entered or exited the area proximal to the system in order to determine when classification is required.

In other circumstances, it may be desirable to know the role that the user is playing in the interaction with the system and the other users. For example, in a car, the role of the driver is significantly different than the role of passengers. Likewise, the role of a teacher or instructor is different than the role of a student in a cockpit or control room situation. Particular roles may be associated with specific receivers. In the case of a vehicle, roles are frequently associated with seating positions, e.g., driver, passenger, pilot, copilot, etc. In a control room, specific portable receivers might be designated for a set of roles.

When the user's role, class, or identity is known, the system can operate differently for different users. The operation can differ in providing reduced or enhanced functionality, that is, what the system does in response to manipulation of a control, and/or in providing different behavior, that is, the response of the control itself. Haptic feedback from the control is an example of behavior that can differ on a per user basis. There are clearly some cases in the range between behavior and functionality, for example, using a different output modality for some user roles, e.g., audio for a driver and video for a passenger, are either behavior or functionality.

In this embodiment, both the behavior and functionality of the system can differ based on the operating user(s).

### Haptic Feedback

By changing the tactile feel of a control, the user has individualized feedback that is intuitive, and does not distract other users not touching the control, see U.S. Patent Application serial number 10/840,748 entitled "HandHeld Haptic Stylus" filed by Dietz et al. on May 6, 2004 and incorporated herein by reference. Haptic feedback is particularly useful when the functionality of a control is user dependent. For example, a haptic pen, which is enabled for a specific user, can physically 'click' when pressed, but not respond for other users. There are a great many haptic devices that are known in the art that present a variety of programmable sensations. With the addition of a conductive surface driven with a unique signal according to the invention, the haptic response can now depend upon the particular user, as well as other, traditional factors.

### Applications

The invention can augment vehicle controls. By placing the electrodes in seats or seat belts, the system can distinguish controls operated by the driver or passengers, and modify the operation of the controls accordingly, perhaps, according to user role and preset user preferences.

Some navigation systems are disabled while the vehicle is moving to minimize driver distraction. With the invention, it is possible to permit passengers to operate navigation functions while the vehicle is in motion, while disabling those same functions for the driver. Similarly, feedback can be provided in audio or visual form depending on which vehicle occupant touched the control.

Some controls, such as door, window, entertainment, seat and enviromnental controls, are duplicated in vehicles. This increases cost. The invention enables a single set of controls to operate differently for different users depending on the user's role as determined by seating location within the vehicle and/or preset user preferences.

In addition, a 'push-to-talk' (PTT) control of a radio transceiver can be arranged between the seats. Then, the invention can be used to acoustically 'steer' a microphone array towards the particular user touching the PTT control. Thus, a multi-user voice interface based on a single control can be enabled.

Airline cockpits and control rooms frequently record every action taken by pilots and operators. This is useful for training, and operational and accident analysis. Currently, there is no easy way to know whether the pilot or the copilot actuated a particular control. The personalized controls according to the invention solve this problem, particularly when control data is time-stamped to provide a journal.

Because the invention detects the proximity of all users at any given time, it is possible to require that multiple users actuate a particular control at the same time for safety reasons. For example, it is common practice that both pilots have a hand on the throttle during take-offs and landing. With this invention, it becomes possible to enforce this practice.

Although the invention has been described by way of examples of preferred embodiments, it is to be understood that various other adaptations and modifications may be made within the spirit and scope of the invention. Therefore, it is the object of the appended claims to cover all such variations and modifications as come within the true spirit and scope of the invention.

## Claims

1. A system with differentiated user controls, comprising:
a plurality of controls (102 -104);
a conductive surface (115) arranged in a close proximity to each control (102 - 104);
a transmitter (101) connected to the conductive surfaces (115), the transmitter (101) emitting a unique signal to each conductive surface (115);
a plurality of electrodes (107, 108), each electrode arranged in close proximity to a particular one of a plurality of users of the controls (102 - 104);
a receiver (111, 112) connected to each corresponding electrode; and
means (200) for associating a particular user with a particular control when the particular user is capacitively coupled to a particular conductive surface via the electrode, the receiver and the transmitter.

2. The system of claim 1, in which the conductive surfaces (115) are electrically isolated from each other.

3. The system of claim 1, further comprising:
a dielectric sheet configured to electrically isolate each conductive surface (115).

4. The system of claim 1, in which the unique signals are time-shifted variations of a binary sequence produced by a linear feedback shift register in the transmitter (101).

5. The system of claim 1, in which the unique signal uses code division multiple access.

6. The system of claim 1, in which the unique signal uses time division multiple access.

7. The system of claim 1, in which the system uses frequency division techniques.

8. The system of claim 1, further comprising:
a touch-sensitive surface (220), wherein the conductive surface is arranged on the touch sensitive surface.

9. The system of claim 1, further comprising:
a plurality of chairs (109, 110), wherein the electrodes (107, 108) are arranged in the chairs.

10. The system of claim 1, in which the receivers (111, 112) are portable, and each user carries a receiver coupled to the corresponding electrode.

11. The system of claim 1, further comprising:
means for operating the system according to the particular user actuating the particular control.

12. The system of claim 1, further comprising:
means for operating the system according to the particular user touching the particular control.

13. The system of claim 11, in which a function of the system is varied according to the particular user.

14. The system of claim 11, in which a behavior of the system is varied according to the particular user.

15. The system of claim 11, in which a function of the system is varied according to a role of the particular user actuating the particular control.

16. The system of claim 11, in which a function of the system is varied according to a particular class of users.

17. The system of claim 11, in which a function of the system is varied according to particular user preferences.

18. The system of claim 1, further comprising:
means for uniquely identifying the particular user.

19. The system of claim 1, further comprising:
means for classifying the particular user according to a desired classification.

20. The system of claim 18, further comprising:
means for identifying the particular user role by associating the role with one or more receivers.

21. The system of claim 18, in which the means for identifying is a log-on procedure.

22. The system of claim 18, further comprising:
means for operating the system according to the particular user actuating the particular control, and according an unique identity of the particular user.

23. The system of claim 1, further comprising:
haptic feedback means signaling according to the particular user.

24. The system of claim 1, in which the plurality of controls are arranged in a vehicle.

25. The system of claim 1, in which the plurality of controls are arranged in an airplane.

26. The system of claim 1, in which the plurality of controls are arranged in a control room.

27. The system of claim 1, in which the transmitters (101) are local to each conductive surface.

28. The system of claim 1, in which the transmitters (101) are coupled to the electrodes (107, 108), and the receivers (111, 112) are coupled to the conductive surfaces (115).

29. The system of claim 11, further comprising:
means for generating a temporal journal according to operating.

30. The system of claim 1, in which the particular control is a push-to-talk button.

31. The system of claim 30, further comprising:
means for acoustically steering a microphone towards the particular user.

32. A method for operating a system with personalized user controls, comprising:
transmitting (101) a unique signal to each one of a plurality of conductive surfaces, each conductive surface arranged in a close proximity to each corresponding one of a plurality of controls (102 - 104);
receiving (111, 112) a particular one of the unique signals in a receiver coupled to an electrode arranged in close proximity to a particular one of a plurality of users touching a particular control; and
operating (200) the system according to the particular unique signal.

33. The method of claim 32, further comprising:
isolating electrically the conductive surfaces (115) from each other.

34. The method of claim 32, further comprising:
arranging the electrodes (107, 108) in a plurality of chairs (109, 110).

35. The method of claim 32, in which the operating (200) is according to a preset user.

36. The method of claim 32, in which the operating (200) is according to a preset user class.

37. The method of claim 32, in which the operating (200) is according to a preset role preferences.

38. The method of claim 32, further comprising:
identifying uniquely the particular user.

39. The method of claim 38, further comprising:
operating (200) the system according to the unique identity of the particular user.

40. The method of claim 32, further comprising:
providing haptic feedback to the particular user.

41. The method of claim 32, further comprising:
generating a temporal journal according to the operating.
